# FASCICULE DE BREVET EUROPEEN

(11) **EP 1 277 607 B1**
(45) Date de publication et mention de la délivrance du brevet: **02.01.2008**
(21) Numéro de dépôt: 02356137.6
(22) Date de dépôt: 09.07.2002
(51) Int. Cl.: B60J 5/06, E05D 15/30, E05D 15/10

(54) **Cabine d'engin de travaux publics comprenant une porte possédant un dispositif d'ouverture et de fermeture d'une porte, et engin de travaux publics equipé d'une telle cabine**
Fahrerkabine einer Baumaschine mit einer Vorrichtung zum Öffnen und Schliessen einer Tür, und Baumaschine mit einer solchen Fahrerkabine
Cabin of a construction machine having a device for opening and closing a door and construction machine with such a door

(30) Priorité: 18.07.2001 FR 0109591
(43) Date de publication de la demande: 22.01.2003
(73) Titulaire: Groupe Mecalac, 74940 Annecy le Vieux (FR)
(72) Inventeur: Marchetta, Henri, 74320 Sevrier (FR); Marchetta, Alexandre, 74000 Annecy (FR)
(74) Mandataire: Palix, Stéphane

(56) Documents cités:
- GB-A- 398 828
- US-A- 3 982 601
- US-A- 4 268 996
- US-A- 5 564 774

## Description

La présente invention concerne une cabine d'engin de travaux publics équipé d'une porte possédant un dispositif d'ouverture et de fermeture.

### Etat de la technique

On connaît d'après le document US- 5.564.774 un engin de travaux publics présentant une cabine munie d'une porte qui coulisse le long de la paroi adjacente arrière de la cabine. Le dispositif d'ouverture et de fermeture de la porte se présente sous la forme d'une glissière. Des coulisseaux sous la forme de rouleaux sont prévus sur l'un des cotés verticaux de la porte. Les rouleaux viennent en prise avec un rail jouant le rôle de glissière placé contre la paroi adjacente arrière.

On connaît également d'après le document US- 4.268.996 une porte pouvant s'ouvrir et se refermer grâce à des moyens se présentant sous la forme de glissières. Dans ces glissières, viennent coulisser respectivement chacune des extrémités de trois bras pivotants. Une première glissière est positionnée au niveau du chambranle de la porte. Une deuxième glissière de la porte est positionnée contre une paroi adjacente fixe de la porte. Et, une troisième glissière est positionnée à l'intérieur et contre la porte.

Le premier bras coulisse dans la première glissière et pivote par rapport à cette même première glissière et par rapport au coin supérieur de la porte. Le deuxième bras coulisse dans la deuxième glissière et pivote par rapport à cette même deuxième glissière et par rapport au côté latéral. Le troisième bras coulisse dans la troisième glissière et pivote par rapport à cette même troisième glissière et par rapport au montant latéral du chambranle de la porte.

Le document GB- 398.828 décrit une fenêtre pouvant s'ouvrir et se refermer grâce à deux glissières parallèles, supérieure et inférieure, prévues à l'arrière de la fenêtre. Dans chacune de ces glissières viennent coulisser deux guides, montés au niveau de chacun des coins arrières, supérieur et inférieur, de la fenêtre. Deux bras, supérieur et inférieur, pivotent chacun, d'une part par rapport aux coins avants, supérieur et inférieur, de la fenêtre et d'autre part par rapport au chambranle de la fenêtre.

Cependant, de tels dispositifs d'ouverture et de fermeture présentent un premier inconvénient de nécessiter de la part de l'utilisateur un mouvement qui ne va pas être naturel pour ouvrir et pour fermer la porte ou la fenêtre. En outre, les dispositifs d'ouverture et de fermeture de l'état de la technique présentent un deuxième inconvénient de ne pas être adaptés aux portes présentant une conformation incurvée Par leur mécanisme, les dispositifs d'ouverture et de fermeture de l'état de la technique ne sont pas vraiment adaptés à être utilisés dans des conditions de chantiers. L'ouverture puis la fermeture s'avèreront difficile voire impossible, en cas d'encrassement puis de grippage des coulisseaux et de la glissière. Enfin, les dispositifs d'ouverture et de fermeture ont l'inconvénient d'avoir une trajectoire de fermeture de la porte qui ne permette pas d'obtenir une bonne étanchéité dès que la porte est refermée.

### Résumé de l'invention

Un premier problème posé est de concevoir une cabine d'engin de travaux publics comprenant une porte possédant un dispositif d'ouverture et de fermeture rappelant l'ouverture ou la fermeture des portes d'une maison, tout en gardant un encombrement de déplacement et un volume occupé de la porte relativement réduits. Un deuxième problème posé est de conférer à la porte une cinématique qui permette d'obtenir une utilisation optimale des joints d'étanchéité entourant la porte ou le chambranle de la porte. Un troisième problème posé est d'obtenir une porte présentant un fonctionnement d'ouverture et de fermeture particulièrement fluide, surtout si elle présente une forme bombée. Un quatrième problème posé est d'équiper un engin de travaux public avec une porte satisfaisant aux exigences des conditions d'utilisations en chantier. L'invention a pour objet une cabine d'engin de travaux publics comprenant une porte possédant un dispositif d'ouverture et de fermeture, comprenant:
- des moyens formant coulisse destinés à faire coulisser la porte,
- des moyens formant coulisseau, venant en prise avec les moyens formant coulisse,
- un axe de rotation vertical par rapport auquel la porte va pivoter, et positionné sur les moyens formant coulisseau, et
- au moins un bras pivotant solidarisé de manière à pivoter, d'une part par l'une de ses extrémités par rapport au chambranle de la porte par une première charnière de pivotement fixe, et d'autre part par une autre de ses extrémités par rapport à la porte par une deuxième charnière de pivotement fixe et dans lequel
   les moyens formant coulisse sont formés par une glissière positionnée contre une paroi adjacente fixe située à l'arrière de la porte, et
   en ce que les moyens formant coulisseau sont formés par un guide fixé à la porte au niveau de son côté latéral vertical arrière.

Autrement dit, afin d'obtenir un déplacement de la porte sans à-coups, la rotation et le coulissement se font simultanément et cette rotation est guidée par un bras. D'une part, le ou les bras pivotants peuvent être avantageusement solidarisés par une première charnière de pivotement au chambranle de la porte au niveau du montant horizontal supérieur. Et d'autre part, le ou les bras pivotants peuvent être avantageusement solidarisés par une deuxième charnière de pivotement à la porte au niveau du coin supérieur opposé au côté vertical avec les moyens formant coulisseau.

Accessoirement, le dispositif d'ouverture et de fermeture peut en outre comprendre un deuxième bras pivotant. Ce deuxième bras peut être solidarisé de manière à pivoter par une première charnière de pivotement au chambranle de la porte au niveau du montant horizontal inférieur. Et, le deuxième bras pivotant peut être solidarisé de manière à pivoter par une deuxième charnière de pivotement à la porte au niveau du coin inférieur opposé au côté vertical avec les moyens formant coulisseau.

La porte peut alors présenter de manière avantageuse deux dispositifs de blocage en position totalement ouverte et en position totalement fermée. Le dispositif de blocage en position totalement ouverte peut être disposé au niveau du côté vertical à coulisseau. Le dispositif de blocage en position totalement fermée peut être disposé au niveau du côté opposé au côté vertical à coulisseau. Pour l'aérodynamisme, l'ergonomie et/ou l'esthétique, la porte peut préférentiellement présenter une forme convexe, vue du dessus.

Pour l'aérodynamisme, l'ergonomie et l'esthétique, la cabine comprend préférentiellement une paroi latérale contre laquelle vient se placer la porte, présentant vue du dessus une forme convexe.

### Description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente un engin de travaux public ;
- la Figure 2 représente une vue en perspective de la cabine avec la porte à peine entrebâillée ;
- la Figure 3 représente une vue du dessus de la cabine de la Figure 2 ;
- la Figure 4, 7 et 9 représentent des vues en perspective de la cabine avec différentes positions successives d'ouverture pour la porte ;
- la Figure 5, 6, 8 et 10 représentent des vues du dessus de la cabine avec différentes positions successives d'ouverture pour la porte ;
- la Figure 11 représente une vue en perspective de la cabine avec la porte totalement ouverte ; et
- la Figure 12 représente une vue du dessus de la cabine de la Figure 11.

### Description détaillée

Un engin de travaux public (1) comprend un châssis (2), un compartiment moteur (3), quatre roues (4), et une cabine de pilotage (5) dans laquelle se trouve le poste de pilotage pour l'opérateur. Un bras articulé (6) et un godet ou une pelle (7) destinés au travaux de terrassement actionnés par un ou plusieurs vérins (8) complètent l'engin de travaux public (1). La cabine de pilotage (5) peut être montée sur une tourelle rotative.

La cabine de pilotage (5) comprend une face supérieure (9), une face inférieure (11), une face avant (12), une face arrière (13), une face latérale droite (14), et une face latérale gauche (16). Il est à noter dans cet exemple que la face latérale droite (14) et la face latérale gauche (16) ont été définies par rapport à la position classique de la cabine (5) vue du dessus, l'engin de travaux public (1) progressant en avant. La face latérale droite (14) est plane, en raison de la présence du bras articulé (6) venant se positionner à droite de la cabine (5). La face latérale gauche 16 présente une forme convexe, c'est-à-dire bombée vers l'extérieur, par souci d'esthétique et/ou d'aérodynamisme et/ou d'ergonomie. Toutes les faces (9, 12, 13, 14 et 16) peuvent être munies entièrement ou partiellement de vitres destinées à faciliter la visibilité de l'opérateur.

La face latérale gauche (16) comprend une porte (17) occupant sensiblement moins de la moitié de la superficie de la face (16). Cette porte (17) permet à l'opérateur d'accéder à son siège et à son pupitre de commande pour piloter l'engin de travaux public (1). La porte (17) présente une structure bombée vers l'extérieur étant dans la continuité de la structure bombée de la face (16).

Avec la porte (17), la face (16) comprend ainsi une paroi arrière (18). La paroi arrière (18) sera par voie de conséquence également bombée vers l'extérieur. La porte (17) comprend également une petite face sensiblement triangulaire (19) positionnée à l'avant uniquement destinée à compenser les différences de formes existant entre la face bombée (16) et la face avant (12) également bombée ou rétrécie vers le haut. La porte (17) peut également être formée entièrement ou partiellement par une vitre.

Conformément à l'invention, la porte (17) est mobile et comprend un dispositif d'ouverture et de fermeture. Pour sa manoeuvre, la porte (17) comprend une poignée (21). Le dispositif d'ouverture et de fermeture comprend tout d'abord une glissière (22) plaquée contre la paroi (18) située à l'arrière de la porte (17). Dans la glissière (22) ou rail de guidage, vient se positionner un coulisseau ou guide (23) se présentant à titre d'exemple sous la forme d'un galet ou roulement cylindrique.

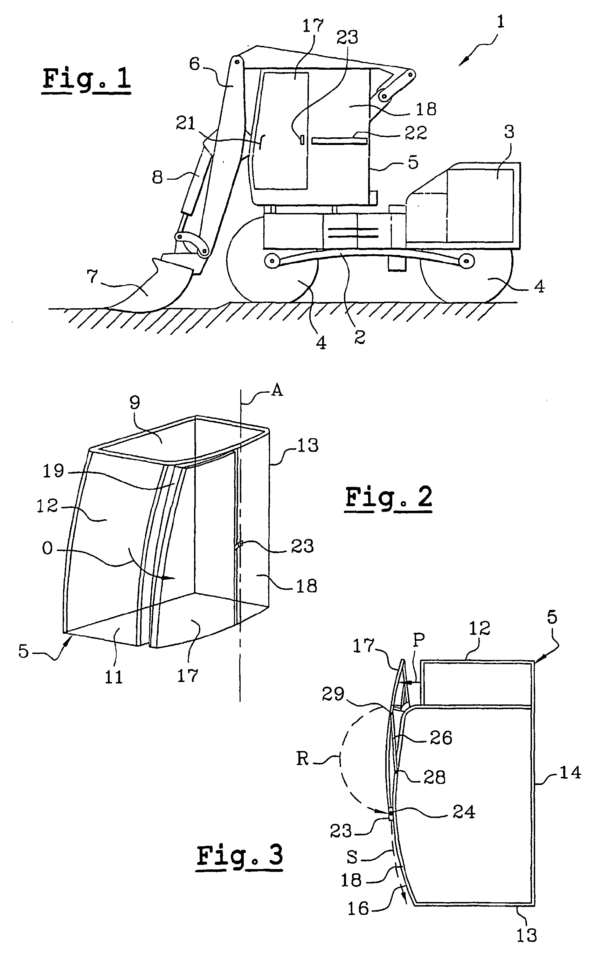

Le guide (23) est fixé à la porte mobile (17) au niveau de son côté latéral vertical arrière opposé au côté latéral vertical avant duquel se trouve la poignée de manoeuvre (21). La porte (17) va ainsi coulisser par ce côté latéral arrière le long de la paroi latérale arrière (18) selon un trajet défini par la flèche (S) (représentée en pointillés en Figure 3).

Pour obtenir un mouvement d'ouverture de la porte (17) totalement sans à-coups, la porte (17) peut pivoter par rapport à un axe de rotation (A). Comme pour une porte traditionnelle, cet axe de rotation (A) est placé au niveau du côté vertical arrière de la porte (17). De manière plus précise, l'axe (A) se matérialise par un pivot vertical (24) inséré dans le guide (23). La porte (17) peut ainsi avoir simultanément un mouvement de déplacement par coulissement le long de la paroi arrière (18) selon le trajet (S) et un mouvement de pivotement par rapport à l'axe (A) selon le trajet (R).

Afin de ne pas avoir une porte (17) avec un déplacement totalement incontrôlé, on a prévu un bras (26) qui est mobile et qui relie la porte (17) au reste de la cabine (5). Le bras (26) est donc solidarisé au montant supérieur (27) du chambranle de la porte (17). Cette solidarisation se fait par une première charnière de pivotement fixe (28) permettant au bras (26) de tourner par rapport à un axe (B). Le bras (26) est décalé par rapport à l'axe (A). La rotation du bras (26) par rapport à l'axe (B) se fait selon le trajet (R) (indiqué en pointillé en Figure 3).

Le bras pivotant (26) est solidarisé à la porte (17) par l'autre de ses extrémités au niveau du coin supérieur avant de la porte (17) qui est opposé au côté vertical arrière présentant le guide (23). Une deuxième charnière de pivotement fixe (29) permet à la porte d'être maintenue et de tourner par rapport à un axe vertical (C).

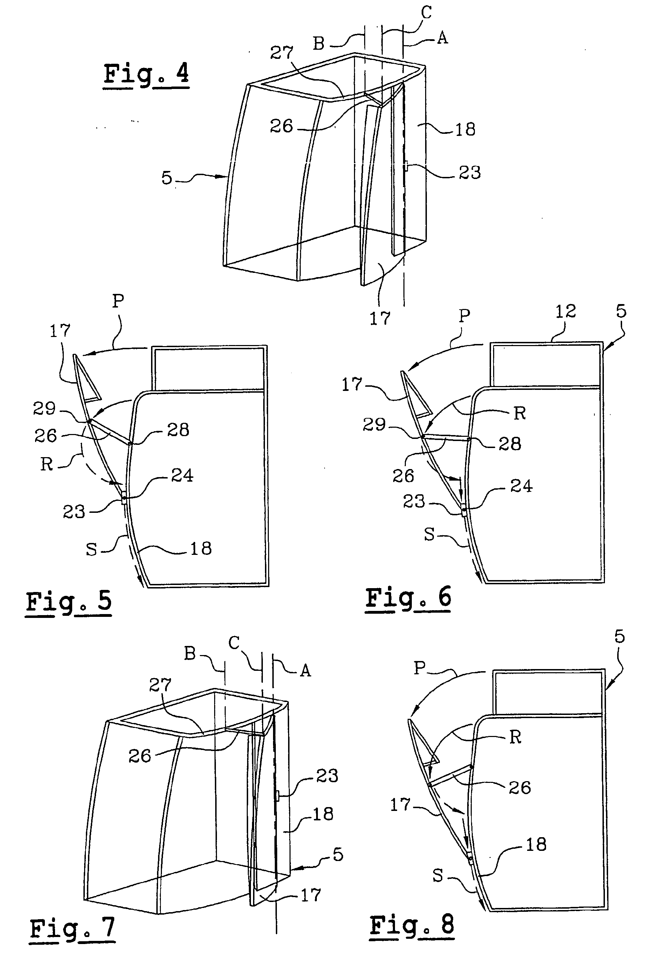

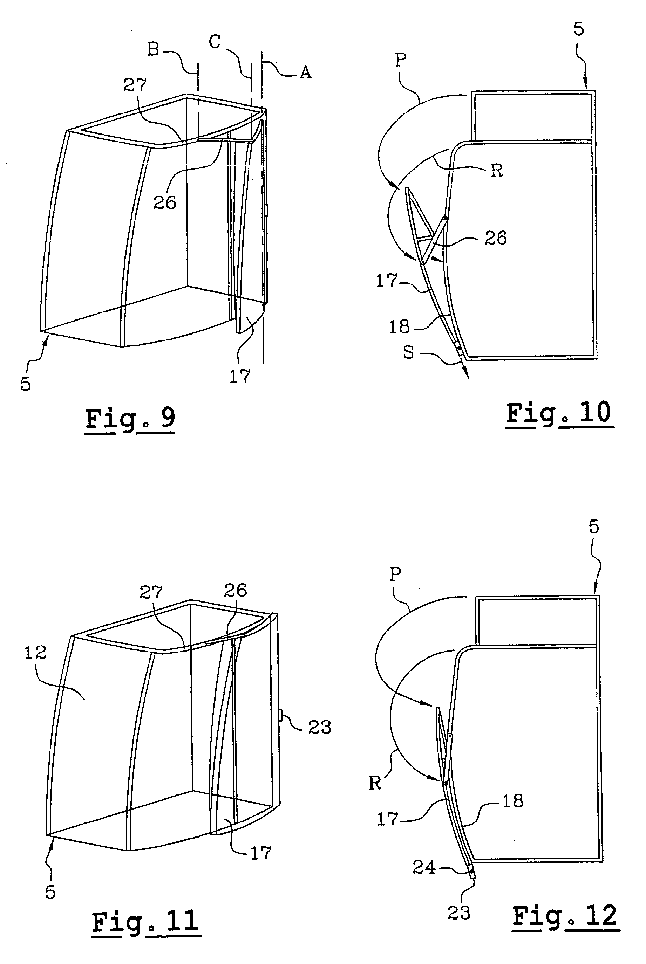

Par le déplacement simultané de la porte (17) selon le coulissement (S) et selon la rotation (R), le côté vertical avant opposé au côté vertical arrière présentant le guide va se déplacer selon la trajectoire (P) (voir plus particulièrement les Figures 6, 8, 10 et 12).

Par la présence du bras (26), la porte (17) ne va pas sortir au-delà de l'encombrement défini par la longueur de ce bras (26). La cinématique du déplacement de la porte selon la trajectoire (P) permet un écrasement des joints d'étanchéité (non représentés) de la porte (17) ou présents autour du chambranle de la porte (17), ainsi que des cônes d'absorption des vibrations qui sont insérés perpendiculairement par rapport à l'ouverture.

Le mouvement de fermeture se fait à l'inverse du mouvement d'ouverture décrit ci-dessus.

La présente invention n'est pas limitée au mode de réalisation décrit et illustré, de nombreuses modifications peuvent être réalisées sans pour autant sortir du cadre défini par la portée du jeu de revendications.

Un deuxième bras (non représenté) pourra être également prévu positionné au niveau du montant inférieur de la porte et du chambranle de la porte. Dans un autre exemple, une ou plusieurs glissières pourront être prévues coopérant avec un ou plusieurs guides. Cette ou ces glissières pourront être prévues par exemple dans les montants supérieurs et/ou dans les montants inférieurs du chambranle de la porte. Le ou les bras pourront être positionnés avec leurs points de fixation à charnière de rotation en différents endroits du chambranle de la porte et de la porte.

## Revendications

1. Cabine d'engin de travaux publics comprenant une porte possédant un dispositif d'ouverture et de fermeture (17), comprenant
- des moyens formant coulisse (22) destinés à faire coulisser la porte (17),
- des moyens formant coulisseau (23), venant en prise avec les moyens formant coulisse (22),
- un axe de rotation vertical (A) par rapport auquel la porte (17) va pivoter, et positionné sur les moyens formant coulisseau (23),
**caractérisée en ce que** le dispositif comporte au moins un bras pivotant solidarisé de manière à pivoter, d'une part par l'une de ses extrémités par rapport au chambranle de la porte (17) par une première charnière de pivotement fixe (28), et d'autre part par une autre de ses extrémités par rapport à la porte (17) par une deuxième charnière de pivotement fixe (29), et dans lequel les moyens formant coulisse (22) sont formés par une glissière positionnée contre une paroi adjacente fixe (18) située à l'arrière de la porte (17), et **en ce que** les moyens formant coulisseau (23) sont formés par un guide fixé à la porte (17) au niveau de son côté latéral vertical arrière.

2. Cabine selon la revendication 1, **caractérisée en ce que** le bras pivotant (26) est solidarisé au chambranle de la porte (17) au niveau du montant horizontal supérieur (27).

3. Cabine selon la revendication 1 ou 2, **caractérisée en ce que** le bras pivotant (26) est solidarisé à la porte (17) au niveau du coin supérieur opposé au côté vertical avec les moyens formant coulisseau.

4. Cabine selon l'une des revendications précédentes, **caractérisé en ce qu'**elle comprend en outre un deuxième bras pivotant, solidarisé de manière à pivoter par une première charnière de pivotement au chambranle de la porte (17) au niveau du montant horizontal inférieur, et solidarisé de manière à pivoter par une deuxième charnière de pivotement à la porte (17) au niveau du coin inférieur opposé au côté vertical avec les moyens formant coulisseau.

5. Cabine selon la revendication 1, **caractérisée en ce qu'**elle présente deux dispositifs de blocage de la porte en position totalement ouverte et en position totalement fermée disposés respectivement au niveau du côté vertical avec les moyens formant coulisseau et au niveau du côté opposé au côté vertical avec les moyens formant coulisseau.

6. Cabine selon la revendication 1, **caractérisée en ce que** la porte présente en vue de dessus, une forme convexe.

## Claims

1. Construction machine cabin comprising a door (17) having an opening and closing device comprising
- means forming a slide (22) designed to cause the door (17) to slide,
- means forming a traveller (23), engaging with the means forming a slide (22),
- a vertical axis of rotation (A) relative to which the door (17) will pivot, and positioned on the means forming a traveller (23),
**characterized in that** the device comprises at least one pivoting arm fixedly attached so as to pivot, on the one hand by one of its ends relative to the frame of the door (17) via a first fixed pivoting hinge (28), and on the other hand by another of its ends relative to the door (17) via a second fixed pivoting hinge (29), and in which the means forming a slide (22) are formed by a runner positioned against a fixed adjacent wall (18) situated at the rear of the door (17), and **in that** the means forming a traveller (23) are formed by a guide fixed to the door (17) at its rear vertical lateral side.

2. Cabin according to Claim 1, **characterized in that** the pivoting arm (26) is fixedly attached to the frame of the door (17) at the top horizontal pillar (27).

3. Cabin according to Claim 1 or 2, **characterized in that** the pivoting arm (26) is fixedly attached to the door (17) at the top corner opposite to the vertical side with the means forming the traveller.

4. Cabin according one of the preceding claims, **characterized in that** it also comprises a second pivoting arm, fixedly attached so as to pivot by a first pivoting hinge to the frame of the door (17) at the bottom horizontal pillar, and fixedly attached so as to pivot by a second pivoting hinge to the door (17) at the bottom corner opposite to the vertical side with the means forming a traveller.

5. Cabin according to Claim 1, **characterized in that** it has two devices for immobilizing the door in the totally open position and in the totally closed position placed respectively on the vertical side with the means forming a traveller and on the side opposite to the vertical side with the means forming a traveller.

6. Cabin according to Claim 1, **characterized in that** the door has a convex shape when seen from above.

## Patentansprüche

1. Baumaschinenkabine mit einer Tür, welche eine Öffnungs- und Schließvorrichtung (17) aufweist, mit
- eine Gleitführung (22) bildenden Mitteln, die dazu bestimmt sind, die Tür (17) zu verschieben,
- einen Gleitschieber (23) bildenden Mitteln, welche in die Gleitführung (22) bildenden Mittel eingreifen,
- einer vertikalen Drehachse (A), in Bezug auf die die Tür (17) verschwenkt und welche auf den den Gleitschieber (23) bildenden Mitteln positioniert ist,
**dadurch gekennzeichnet, dass** die Vorrichtung mindestens einen schwenkbaren Arm aufweist, der einerseits mit einem seiner Enden mittels eines ersten festen Schwenkscharniers (28) schwenkbar mit der Einfassung der Tür (17) verbunden ist und andererseits durch ein anderes seiner Enden mittels eines zweiten festen Schwenkscharniers (29) schwenkbar mit der Tür (17) verbunden ist und wobei die die Gleitführung (22) bildenden Mittel von einer Gleitschiene gebildet sind, welche gegen eine benachbarte feste Wand (18) hinter der Tür (17) angebracht ist, und dass die den Gleitschieber (23) bildenden Mittel von einer an der Tür (17) befestigten Führung im Bereich ihrer hinteren vertikalen Kante gebildet sind.

2. Kabine nach Anspruch 1, **dadurch gekennzeichnet, dass** der schwenkbare Arm (26) an der Einfassung der Tür (17) im Bereich des oberen horizontalen Schenkels (27) befestigt ist.

3. Kabine nach Anspruch 1 oder 2, **dadurch gekennzeichnet, dass** der schwenkbare Arm (26) fest mit der Tür (17) im Bereich der oberen Ecke verbunden ist, die der vertikalen Kante mit den den Gleitschieber bildenden Mitteln gegenüberliegt.

4. Kabine nach einem der vorangehenden Ansprüche, **dadurch gekennzeichnet, dass** sie ferner einen zweiten schwenkbaren Arm umfasst, der mittels eines ersten Schwenkscharniers schwenkbar an der Einfassung der Tür (17) im Bereich des unteren horizontalen Schenkels befestigt ist und durch ein zweites Schwenkscharnier an der Tür (17) im Bereich der unteren Ecke, die der vertikalen Kante mit den den Gleitschieber bildenden Mitteln gegenüberliegt, befestigt ist.

5. Kabine nach Anspruch 1, **dadurch gekennzeichnet, dass** sie zwei Vorrichtungen zum Blockieren der Tür in der vollständig geöffneten Position und in der vollständig geschlossenen Position aufweist, welche im Bereich der vertikalen Kante mit den den Gleitschieber bildenden Mitteln bzw. im Bereich der der Kante mit den den Gleitschieber bildenden Mitteln gegenüberliegenden Kante angeordnet sind.

6. Kabine nach Anspruch 1, **dadurch gekennzeichnet, dass** die Tür in Draufsicht eine konvexe Form aufweist.
